**Europäisches Patentamt**

**European Patent Office**

**Office européen des brevets**

(19)

(11) Veröffentlichungsnummer : **0 190 565 B1**

(12) **EUROPÄISCHE PATENTSCHRIFT**

(45) Veröffentlichungstag der Patentschrift :
**19.10.88**

(21) Anmeldenummer : **86100299.6**

(22) Anmeldetag : **10.01.86**

(51) Int. Cl.⁴ : **E 04 B   1/76, B 29 C 67/22**

(54) **Hohlblockstein und Vorrichtung zu seiner Herstellung.**

(30) Priorität : **07.02.85 DE 3504104**

(43) Veröffentlichungstag der Anmeldung :
**13.08.86 Patentblatt 86/33**

(45) Bekanntmachung des Hinweises auf die Patenterteilung : **19.10.88 Patentblatt 88/42**

(84) Benannte Vertragsstaaten :
**AT BE CH DE FR GB IT LI NL SE**

(56) Entgegenhaltungen :
**CH-A-   451 461**
**DE-A- 2 518 383**
**DE-A- 2 625 453**

(73) Patentinhaber : **Häusler, Alfons**
**Heuberg 1**
**D-8963 Martinszell (DE)**

(72) Erfinder : **Häusler, Alfons**
**Heuberg 1**
**D-8963 Martinszell (DE)**

(74) Vertreter : **Hübner, Hans-Jürgen, Dipl.-Ing.**
**Mozartstrasse 21**
**D-8960 Kempten (DE)**

EP 0 190 565 B1

## Beschreibung

Die Erfindung betrifft eine Vorrichtungsanordnung zur Herstellung von Hartschaumfüllungen aufweisenden Hohlblocksteinen, mit einem Rahmen, der in Längsrichtung einer ggf. mehrere nebeneinander stehende Hohlblocksteinrohlinge aufweisenden Reihe angeordnet ist, wobei Hohlblocksteinrohlinge und Rahmen relativ zueinander bewegbar sind, und mit einer im Abstand oberhalb dieser Reihe Hohlblocksteinrohlinge angeordneten Längstransporteinrichtung für Abdeckplatten, die auf die Hohlblocksteinrohlinge aufgesetzt werden.

Aus der CH-A-451 461 ist eine solche Vorrichtungsanordnung bekannt. Die Längstransporteinrichtung besteht aus einem endlos umlaufenden Gliederband, dessen Glieder durch die Abdeckplatten gebildet sind. Auf ein analog ausgebildetes unteres Gliederband, das in dem stationär gehaltenen Rahmen umläuft, werden die Hohlblocksteinrohlinge aufgesetzt, weiterbefördert und während der Förderung mit Schaumstoff gefüllt, wonach die Abdeckplatten des synchron angetriebenen oberen Gliederbandes auf die Hohlblocksteinrohlinge auflaufen. Allerdings sind zusätzliche Andrückfedern oder pneumatische Einrichtungen notwendig, um die Hohlblocksteinrohlinge durch die Abdeckplatten dicht zu schließen.

Aufgabe der Erfindung ist es, die Vorrichtungsanordnung der eingangs genannten Art so auszubilden, daß Andrückfedern für die Abdeckplatten entbehrlich sind und die Hohlblocksteinrohlinge während der Aushärtezeit des Hartschaumes stationär bleiben.

Diese Aufgabe wird bei einer Vorrichtungsanordnung der eingangs genannten Art dadurch gelöst, daß die Längstransporteinrichtung am Rahmen angeordnet ist und der Rahmen Bodenrollen aufweist und fahrbar ausgebildet ist, und daß an einem Ende des Rahmens eine Plattenhubeinrichtung mit Übergabeeinrichtung an die Längstransporteinrichtung und an deren anderem Ende eine Plattensenkeinrichtung mit Abnahmeeinrichtung von der Längstransporteinrichtung vorgesehen sind.

Mit der Erfindung wird der Vorteil erreicht, daß ein unteres Gliederband ganz entfällt, die Längstransporteinrichtung wesentlich einfacher ausgebildet ist, jegliche federnde Andrückmittel für die Abdeckplatten entbehrlich sind und die Hohlblocksteinrohlinge weder zur Füllstation, während des Füllvorganges noch von der Füllstation zum Lager transportiert werden müssen. Die Hohlblocksteinrohlinge werden von einem an sich bekannten fahrbaren Bodenfertiger auf dem Hallenboden hergestellt und verbleiben dort bis zur Fertigstellung der Hohlblocksteine.

Die Erfindung betrifft weiterhin einen Hohlblockstein gemäß dem Oberbegriff des Anspruchs 8.

Ein Hohlblockstein dieser Art ist aus der CH-A-451 461 und der DE-A-25 18 383 bekannt. Während des Transportes und des Stapelns brechen häufig Schaumstoffstücke aus den Kammern heraus. Um die Hartschaumfüllung zu schützen, deren sichere Verankerung im Hohlblockstein zu gewährleisten und für das Mauern eine absolut glatte Oberfläche bereitzustellen, ist der neue Hohlblockstein mit den kennzeichnenden Merkmalen des Anspruchs 8 ausgestattet.

Dank dieser Ausbildung kann der Hohlblockstein auch schon weitertransportiert werden, bevor die Oberfläche der Schaumstoffüllung völlig ausgehärtet ist, da jegliches Ankleben dank des Folienstückes vermieden wird. Dieser Vorteil ist von besonderem Wert bei beidseitig offenen Hohlblocksteinen.

Anhand der Zeichnung sei die Erfindung beispielsweise näher erläutert.

Es zeigt

Fig. 1 eine perspektivische Ansicht eines Hohlblocksteins,

Fig. 2 eine schematische Ansicht einer Dosiereinrichtung,

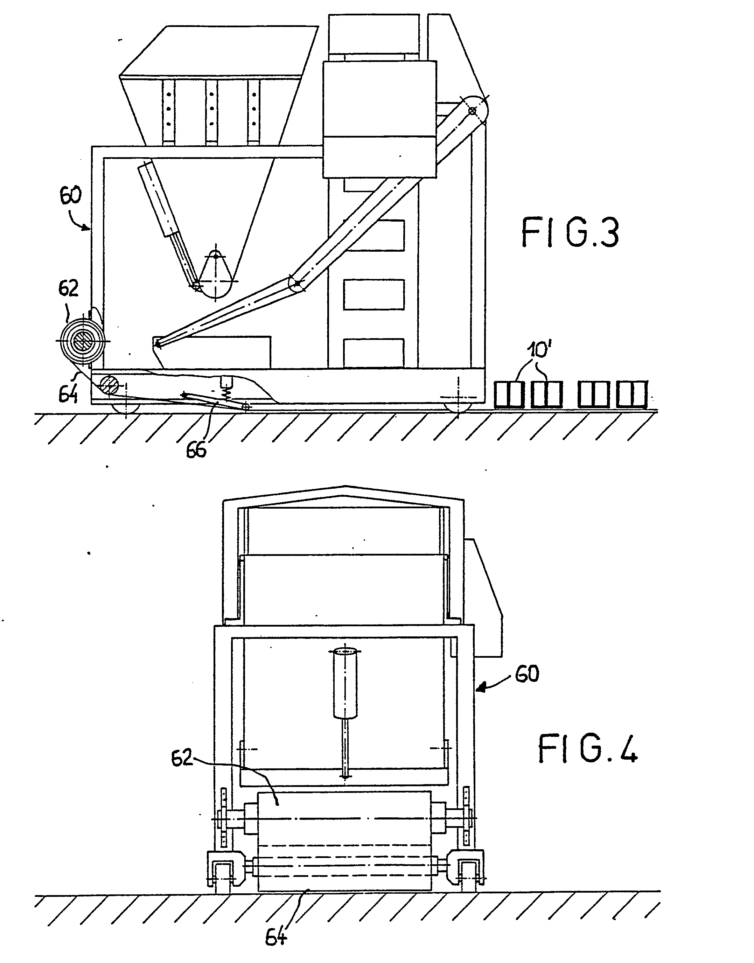

Fig. 3 eine Seitenansicht eines Bodenfertigers für Hohlblocksteinrohlinge,

Fig. 4 eine Vorderansicht des Bodenfertigers von Fig. 3,

Fig. 5 eine Seitenansicht einer Vorrichtung zum Füllen von Hohlblocksteinrohlingen,

Fig. 6 eine Rückansicht der Vorrichtung nach Fig. 5 und

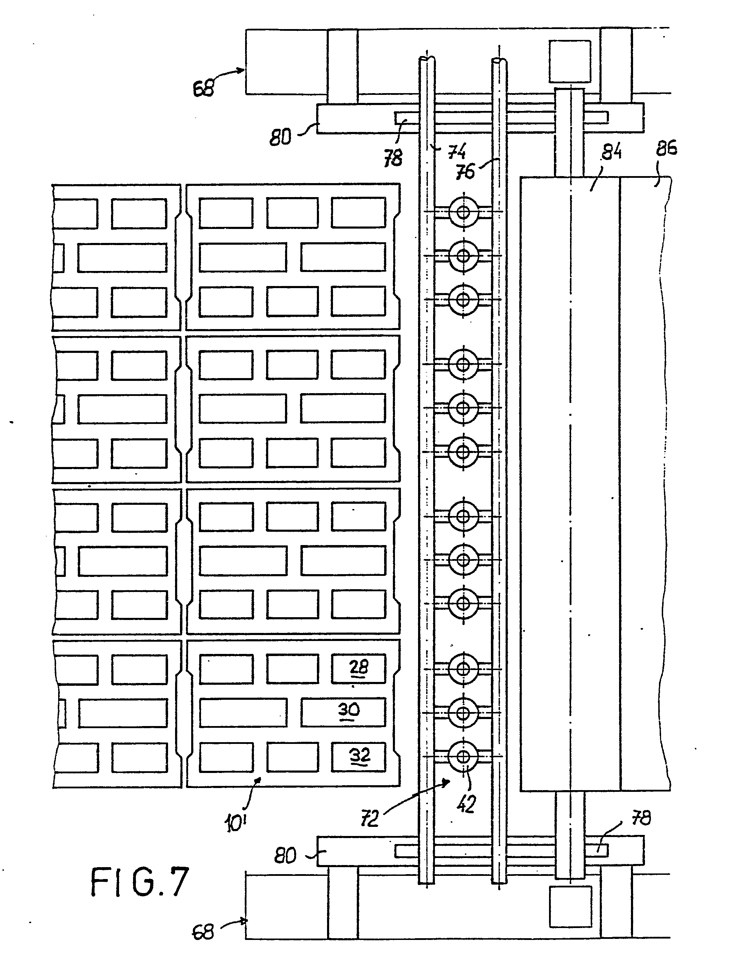

Fig. 7 eine Draufsicht auf eine automatische Dosiereinrichtung in größerem Maßstab.

Ein Hohlblockstein 10 weist zwei Längswände 12, 14, zwei Querwände 16, 18, zwei längsverlaufende Innenwände 20 und eine Anzahl Querwände 22, 24, 26 auf. Zwischen den einzelnen Wänden werden drei Reihen von Kammern 28, 30, 32 gebildet, die je mit einer Hartschaumfüllung 34 versehen sind, welche oberflächenbündig mit den Kammerwänden 12-26 liegt.

Von zwei nicht dargestellten Vorratsbehältern gehen zwei Druckleitungen 38, 40 einer Schaumversorgungseinrichtung 36 aus und münden auf gegenüberliegenden Seiten in einer Mischkammer 42, deren Einlässe und eine Auslaßdüse 48 durch eine Kolbenzylinder-Anordnung 44, 46 gleichzeitig geöffnet werden, um nach Mischung der Komponenten den Schaum aus der Auslaßdüse 48 nacheinander in die Kammern 28-32 einzudosieren. Die einzudosierenden Mengen können vorgewählt werden und sind so bestimmt, daß eine gewisse Überfüllung der Kammern eintreten würde, die aber verhindert wird.

Ein ansich bekannter Bodenfertiger 60 ist fahrbar ausgebildet und setzt geformte Hohlblockstein-Rohlinge 10' üblicherweise auf dem Boden ab. Dieser Bodenfertiger 60 wird nun mit einer Folienvorratsrolle 62 an seinem — in Fahrtrichtung gesehen vorderen Ende — ausgestattet. Die von der Rolle 62 abgezogene Folienbahn 64 verläuft um eine Umlenkrolle zu einer Wippe 66, die die Folienbahn 64 an den Boden drückt. Die Hohlblockstein-Rohlinge 10' werden also auf die Folienbahn 64 abgesetzt, die anschließend, auf dem Boden stehend, nach etwa 2 Tagen Aushärtungszeit mit Schaummasse gefüllt werden können. Etwaige heraussickernde Schaummasse kann dank der Folienbahn 64 nicht zum Ankleben am Boden führen. Außerdem ermöglicht es die Folienbahn 64, daß auch beidseitig offene Hohlblocksteine verarbeitet werden können.

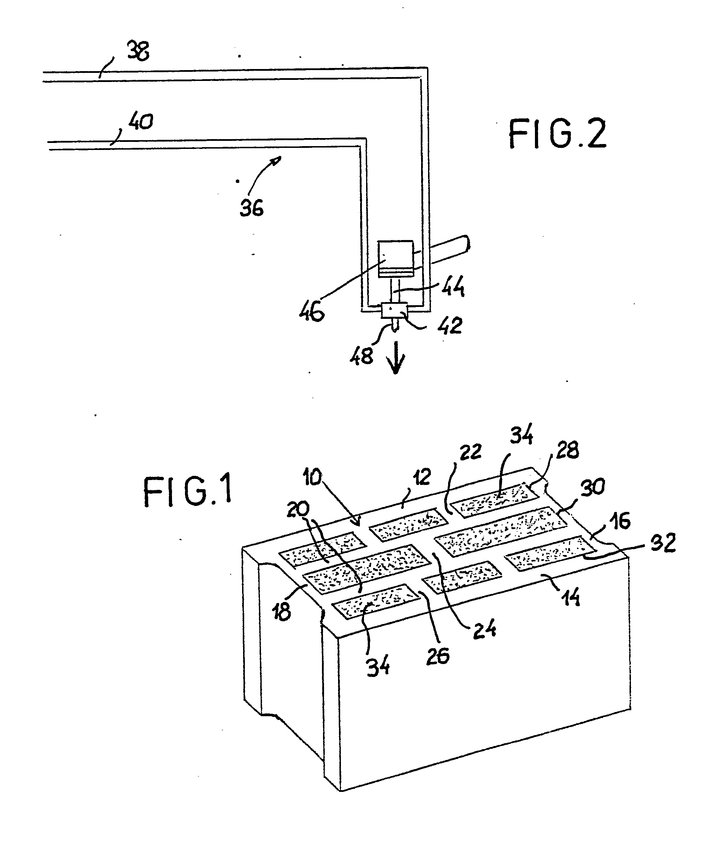

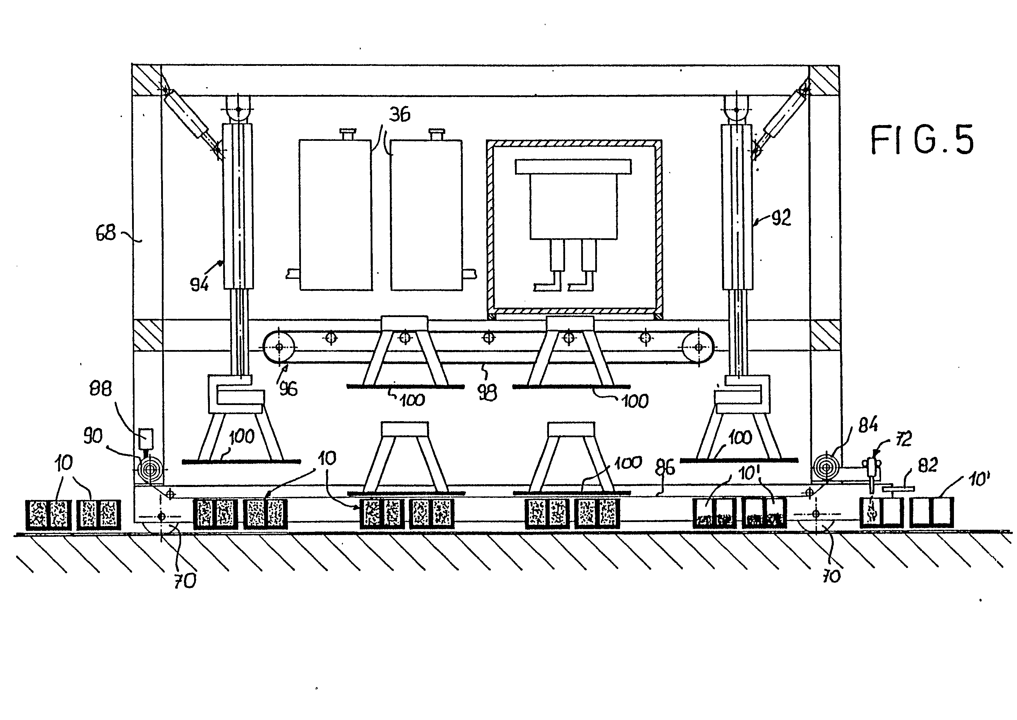

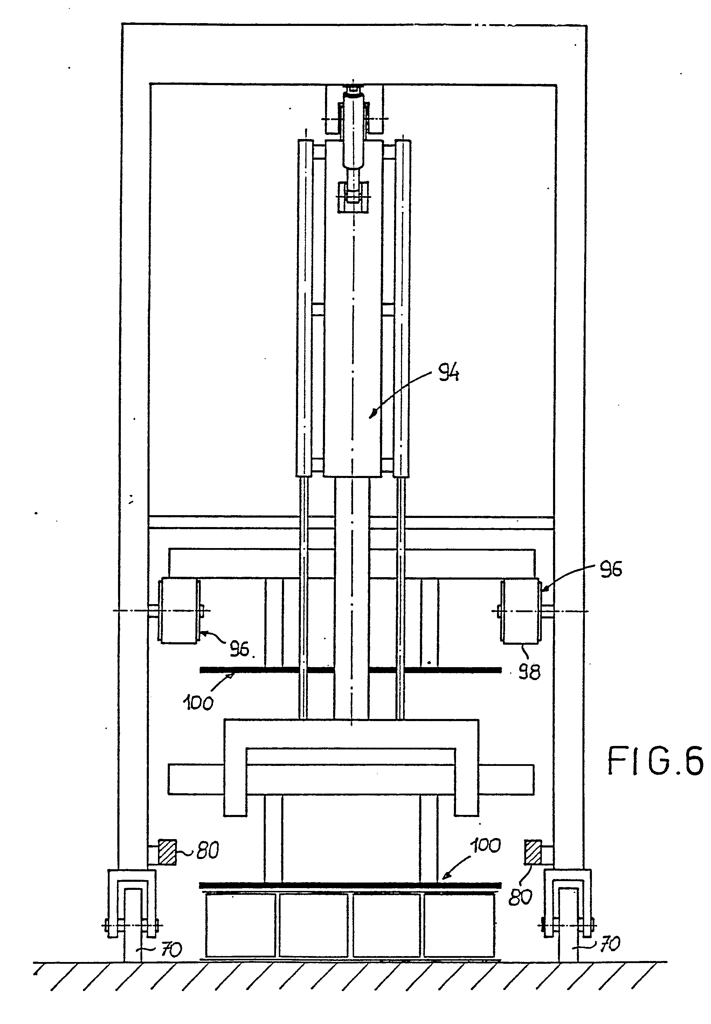

Die in Figuren 5 und 6 gezeigte Vorrichtung zum Füllen von Hohlblockstein-Rohlingen 10' weist einen Rahmen 68 mit Laufrollen 70 auf und ist mittels eines nicht dargestellten Fahrantriebs von links nach rechts (Fig. 5) verfahrbar. Der Rahmen 68 trägt die Schaumversorgungseinrichtung 36, deren Versorgungsleitungen zu einer Dosiereinrichtung 72 am Vorderende des Rahmens 68 führen. Diese erstreckt sich über die ganze Breite des Rahmens 68 und weist zwei Rohre 74, 76 auf, die an die beiden Leitungen der Versorgungseinrichtung 36 angeschlossen sind. Zwischen den Rohren 74, 76 ist eine Anzahl Mischkammern 42 entsprechend der Zahl Kammern 28, 30, 32 von mehreren nebeneinanderstehenden Hohlblockstein-Rohlingen 10' eingeschaltet. Die Mischkammern 42 weisen die schon in Verbindung mit Fig. 2 beschriebenen Dosierverschlüsse auf, die programmgesteuert gleichzeitig betätigt werden. Die Dosiereinrichtung 72 ist auf Schlitten 78 montiert, die am Rahmen 68 auf Schienen 80 längsverfahrbar sind. Ein nicht dargestellter Antrieb kann die Dosiereinrichtung 72 am Rahmen 68 in Fahrrichtung und entgegen der Fahrrichtung verstellen. Die Verstellung erfolgt in Abhängigkeit eines berührungslosen Tasters 82.

Am Vorderende des Rahmens 68 unmittelbar hinter der Dosiereinrichtung 72 befindet sich eine Folienrolle 84, von der eine Folienbahn auf das Paket zuvor mit Schaummasse beschickter Hohlblockstein-Rohlinge 10' aufgelegt ist. Die Folienbahn 86 erstreckt sich über die ganze Länge des Rahmens 68 und wird am hinteren Ende von einer mit einem Motor 88 versehenen Aufwickelspule 90 wieder aufgewickelt.

Während die einzelnen Kammern 28, 30, 32 des vor dem Rahmen 68 stehenden Paketes durch Längsverfahren der Dosiereinrichtung 72 mit Schaummasse beschickt werden, kann der Rahmen 68 stillstehen und mittels einer Plattensenkeinrichtung 92 wird auf das zuvor befüllte Paket an Hohlblockstein-Rohlingen 10' eine Abdeckplatte 100 unter Zwischenlage der Folienbahn 86 aufgesetzt. Die Plattensenkeinrichtung 92 weist einen nach hinten offenen Haken auf, der eine Aufhängeeinrichtung der Abdeckplatte 100 untergreift und an einem Hubzylinder sitzt, der seinerseits von einem Schwenkzylinder verschwenkt werden kann. Nach dem Aufsetzen der Abdeckplatte 100 fährt der Rahmen bis zur nächsten Stellung weiter. Die Abdeckplatte 100 kommt aus dem Bügel der Plattensenkeinrichtung 92 frei und ruht auf dem Paket Hohlblockstein-Rohlinge, in denen jetzt der Schaum steigt und die Kammern füllt. Während am Vorderende des Rahmens 68 eine Platte 100 abgesenkt wird, wird am Hinterende des Rahmens 68 eine Platte 100 vom fertigen Stapel gefüllter Hohlblocksteine 10 mittels einer Plattenhubeinrichtung 94 hochgehoben. Die Plattenhubeinrichtung 94 entspricht im Aufbau der Plattensenkeinrichtung 92. Zwischen den Plattensenk- und -hubeinrichtungen 92. 94 befindet sich eine Längstransporteinrichtung 96 in ausreichendem Abstand oberhalb der auf den Steinstapeln ruhenden Abdeckplatten 100. Die Längstransporteinrichtung weist zwei parallele endlos umlaufende Bänder 98 auf, deren Umlenkrollen am Rahmen 68 drehbar gelagert sind. Die Plattenhubeinrichtung 94 hebt die Aufhängeeinrichtung der Abdeckplatte 100 auf das Niveau des oberen Trums der Längstransporteinrichtung 96 und ihr Schwenkzylinder verschwenkt dann den Hubzylinder, sodaß die Aufhängeeinrichtung der Abdeckplatte 100 auf der Längstransporteinrichtung 96 abgesetzt werden kann. Diese wird dann motorisch angetrieben, um die aufgehängte Abdeckplatte 100 mit mehreren weiteren Abdeckplatten nach vorn zu bewegen, wobei die vorderste Platte 100 von der Plattensenkeinrichtung 92 übernommen wird und die Plattenhubeinrichtung 94 wieder in ihre Ausgangslage zurückgeht.

Die Folienbahn 86 hat eine antihaftende Oberfläche und löst sich sauber beim Weiterfahren des Rahmens 68 von der ausgehärteten Oberfläche der Hartschaumfüllung in den Hohlblocksteinen 10.

Die Folienbahn 86 muß nicht notwendigerweise von den Hohlblocksteinen 10 abgezogen werden, sondern kann mit einer nachgeschalteten automatischen Stanzeinrichtung so zerschnitten werden, daß jeder Hohlblockstein 10 ein abdeckendes Folienstück behält.

## Patentansprüche

1. Vorrichtungsanordnung zur Herstellung von Hartschaumfüllungen (34) aufweisenden Hohlblocksteinen (10), mit einem Rahmen (68), der in Längsrichtung einer ggf. mehrere nebeneinander stehende Hohlblocksteinrohlinge (10') aufweisenden Reihe angeordnet ist, wobei Hohlblocksteinrohlinge (10') und Rahmen (68) relativ zueinander bewegbar sind, und mit einer im Abstand oberhalb dieser Reihe Hohlblocksteinrohlinge (10') angeordneten Längstransporteinrichtung (96) für Abdeckplatten (100), die auf die Hohlblocksteinrohlinge (10') aufgesetzt werden, dadurch gekennzeichnet, daß die Längstransporteinrichtung (96) am Rahmen (68) angeordnet ist und der Rahmen (68) Bodenrollen (70) aufweist und fahrbar ausgebildet ist, und daß an einem Ende des Rahmens (68) eine Plattenhubeinrichtung (94) mit Übergabeeinrichtung an die Längstransporteinrichtung (96) und an deren anderem Ende eine Plattensenkeinrichtung (92) mit Abnahmeeinrichtung von der Längstransporteinrichtung (96) vorgesehen sind.

2. Vorrichtungsanordnung nach Anspruch 1, dadurch gekennzeichnet, daß in Bewegungsrichtung des Rahmens (68) vor der Plattensenkeinrichtung (92) eine Folienbahnrolle (84) drehbar gelagert ist, deren Folienbahn (86) zu dem Teil der Reihe Hohlblocksteinrohlinge (10') führt, die sich unter dem Rahmen (68) befinden und die unter Abdeckung durch die Folienbahn (86) von den Abdeckplatten (100) belastet sind.

3. Vorrichtungsanordnung nach Anspruch 2, dadurch gekennzeichnet, daß der Rahmen (68) eine Polyurethan-Schaumbildungsanlage (36) trägt und an seinem in Fahrrichtung vorliegenden Ende eine, an die Schaumbildungsanlage (36) angeschlossene Dosiereinrichtung (72) aufweist, die mehrere, quer zur Fahrrichtung angeordnete, mit Auslaßdüsen versehene Mischkammern (42) umfaßt.

4. Vorrichtungsanordnung nach Anspruch 3, dadurch gekennzeichnet, daß die Dosiereinrichtung (72) in Fahrrichtung am Rahmen (68) längsbeweglich gelagert ist.

5. Vorrichtungsanordnung nach einem der Ansprüche 2 bis 4, dadurch gekennzeichnet, daß die Abdeckplatten (100) mit Schneidmessern versehen sind, die beim Auflegen der Abdeckplatten (100) auf die Hohlblocksteinrohlinge (10') Folienstücke von der Folienbahn (86) abtrennen.

6. Vorrichtungsanordnung nach einem der Ansprüche 2 bis 4, dadurch gekennzeichnet, daß an der Hinterseite des Rahmens (68) eine angetriebene Aufwickelspule (90) für die Folienbahn (86) vorgesehen ist, die diese von den Hohlblocksteinen (10) automatisch abzieht.

7. Vorrichtungsanordnung nach einem der Ansprüche 1 bis 6, dadurch gekennzeichnet, daß am Vorderende eines fahrbaren Hohlblockstein-Bodenfertigers (60) eine sich selbst abwickelnde Folienbahnrolle (62) drehbar gelagert ist, deren Folienbahn (64) unter dem Hohlblockstein-Bodenfertiger (60) auf dem Boden aufliegt und auf der die gefertigten Hohlblocksteinrohlinge (10') ruhen.

8. Hohlblockstein (10), gefertigt mit der Vorrichtungsanordnung nach den Ansprüchen 5 und 7, der durch längsverlaufende Innenwände (20) und Querwände (22, 24, 26) von einander getrennte Kammern (28, 30, 32) aufweist, in denen sich eine Hartschaumfüllung (34) befindet, wobei die Oberflächen der Hartschaumfüllungen (34) exakt kantenbündig und plan mit der Oberseite der Kammerwände (12, 14, 16, 18, 20, 22, 24, 26) abschließen, dadurch gekennzeichnet, daß die Kammerwände innenseitig mit solcher Rauheit geformt sind, daß eine Vielzahl kleiner Vorsprünge und Vertiefungen gebildet sind und die Vorsprünge in die Hartschaumfüllung (34) und an dieser einstückig ausgebildete Verankerungsnoppen in die Vertiefungen jeweils formschlüssig eingreifen und daß die mindestens eine Offenseite der Kammern (28, 30, 32) durch ein Folienstück einer Folienbahn (86) abgedeckt ist, das zum leichten Abziehen an der der Hartschaumfüllung (34) zugewandten Seite eine Antihaftoberfläche aufweist.

**Claims**

1. Facility arrangement for the production of hollow blocks (10) provided with rigid expanded polyurethane fillings (34), comprising a frame (68) which is arranged in the longitudinal direction of a row composed of a plurality of side by side standing hollow block blanks (10') if need be, whereby the hollow block blanks (10') and the frame (68) are relatively movable with respect to one another, and a longitudinal conveying device (96) spaced above this row of hollow block blanks (10') for coverplates (100) to be placed on the hollow block blanks (10'), characterized in that the longitudinal conveying device (96) is arranged at the frame (68) and the frame (68) is provided with bottom rollers (70) and is travelling, and that at one end of the frame (68) a plate lifting device (94) together with a transfer device to the longitudinal conveying device (96) is provided and at the other end thereof a plate lowering device (92) together with a remove device from the longitudinal conveying device (96) is provided.

2. Facility arrangement according to claim 1, characterized in that a film web roller (84) is rotatably supported ahead of the plate lowering device (92) as seen in the moving direction of the frame (68), the film web (86) thereof leading to that part of the row of hollow block blanks (10') which are below the frame (68) and which covered by the film web (86) are loaded by the cover plates (100).

3. Facility arrangement according to claim 2, characterized in that the frame (68) carries an expanded polyurethane producing plant (36), and at its leading end — as seen in travelling direction — is provided with a metering device (72) associated with the expanded polyurethane producing plant (36), the metering device (72) comprising a plurality of mixing chambers (42) arranged crosswise with respect to the travelling direction and provided with discharge nozzles.

4. Facility arrangement according to claim 3, characterized in that the metering device (72) is supported at the frame (68) for longitudinal movement in travelling direction.

5. Facility arrangement according to claims 2 to 4, characterized in that the covering plates (100) are provided with cutting knives which upon placing the covering plates (100) on the hollow block blanks (10') sever film sections from the film web (86).

6. Facility arrangement according to one of the claims 2 to 4, characterized in that at the trailing side of the frame (68) a driven winding drum (90) for the film web (86) is provided, which draws off the latter from the hollow blocks (10) automatically.

7. Facility arrangement according to one of the claims 1 to 6, characterized in that a self unwinding film web roller (62) is rotatably supported at the leading end of a travelling hollow block bottom producer (60), the film web (64) thereof lies on the bottom below the hollow block bottom producer (60) and the produced hollow block blanks (10') resting thereon.

8. Hollow block (10) produced by the facility arrangement according to the claims 5 and 7, comprising chambers (28, 30, 32) separated from one another by longitudinally extending inner walls (20) and cross walls (22, 24, 26), and in which an expanded polyurethane filling (34) is provided, whereby the surfaces of the expanded polyurethane fillings (34) end exactly edge-flush and planar with the upper side of the chamber walls (12, 14, 16, 18, 20, 22, 24, 26), characterized in that the chamber walls at the inside are formed with such a roughness that a multiplicity of small projections and recesses are formed and the projections engage into the expanded polyurethane filling (34) and anchoring nubs integrally formed thereon engage into the recesses in a form-fit manner respectively, that the at least one open side of the chambers (28, 30, 32) is covered by a film section of a film web (86), the film section for an easy draw-off is provided at the side facing the expanded polyurethane filling (34) with an antiadhesive surface.

## Revendications

1. Arrangement de dispositifs servant à la fabrication de blocs creux (10) pourvus de charges de mousse rigide (34) et comprenant un châssis (68) disposé dans le sens longitudinal d'une rangée constituée le cas échéant de plusieurs ébauches (10') de blocs creux posées côte à côte, ces ébauches (10') de blocs creux et le châssis (68) étant déplaçables relativement l'un à l'autre, ainsi qu'un dispositif de transport longitudinal (96) pour des plaques de recouvrement (100), situé à une certaine distance au-dessus de ladite rangée d'ébauches (10') de blocs creux, les plaques de recouvrement (100) étant posées sur lesdites ébauches (10') de blocs creux, caractérisé en ce que le dispositif de transport longitudinal (96) se trouve sur le châssis (68) et ce dernier (68) est doté de roues (70) et est réalisé sous une forme mobile et en ce qu'on a prévu, à une extrémité du châssis (68), un mécanisme de levage de plaques (94) avec système de transfert au dispositif de transport longitudinal (96) et, à l'autre extrémité dudit châssis (68), un mécanisme de descente de plaques (92) avec système de réception depuis le dispositif de transport longitudinal (96).

2. Arrangement de dispositifs selon la revendication 1, caractérisé en ce qu'on a monté, dans le sens de déplacement du châssis (68), devant le dispositif de descente de plaques (92), à l'état rotatif, un rouleau de feuille (84) dont la feuille (86) parvient à la partie de la rangée d'ébauches (10') de blocs creux qui se trouvent en dessous du châssis (68) et qui reçoivent les plaques de recouvrement (100) après application de la feuille (86).

3. Arrangement de dispositifs selon la revendication 2, caractérisé en ce que le châssis (68) comprend une installation de formation de mousses de polyuréthane (36) et est muni, à son extrémité se situant dans le sens de la marche, d'un doseur (72) raccordé à l'installation de formation de mousses (36) et comportant plusieurs chambres de mélange (42) disposées transversalement au sens de la marche et pourvues de buses de décharge.

4. Arrangement de dispositifs selon la revendication 3, caractérisé en ce que le doseur (72) est déplaçable longitudinalement sur le châssis (68) dans le sens de la marche.

5. Arrangement de dispositifs selon l'une quelconque des revendications 2 à 4, caractérisé en ce que les plaques de recouvrement (100) sont pourvues de couteaux qui, lors de la pose desdites plaques de recouvrement (100) sur les ébauches (10') de blocs creux, séparent les morceaux de feuille de la feuille (86).

6. Arrangement de dispositifs selon l'une quelconque des revendications 2 à 4, caractérisé en ce qu'une bobine d'enroulement commandée (90) pour la feuille (86) est prévue du côté arrière du châssis (68) et enlève automatiquement ladite feuille des blocs creux (10).

7. Arrangement de dispositifs selon l'une quelconque des revendications 1 à 6, caractérisé en ce qu'on a monté à l'état rotatif, à l'extrémité avant d'un finisseur de fond mobile (60) pour les blocs creux, un rouleau de feuille se déroulant automatiquement (62) et dont la feuille (64) repose sur le sol en dessous du finisseur de fond (60) pour les blocs creux, feuille sur laquelle sont disposées les ébauches (10') de blocs creux produites.

8. Bloc creux (10) fabriqué à l'aide de l'arrangement de dispositifs selon l'une quelconque des revendications 5 et 7, et se composant de chambres (28, 30, 32) séparées l'une de l'autre par des parois transversales (22, 24, 26) et des parois intérieures (20) disposées longitudinalement et dans lesquelles est présente une charge de mousse rigide (34), les surfaces de ces charges de mousse rigide (34) étant à fleur exactement, par les chants, et dans le plan de la face supérieure des parois (12, 14, 16, 18, 20, 22, 24, 26) des chambres, caractérisé en ce que les parois des chambres présentent intérieurement une rugosité telle qu'un grand nombre de petites saillies et de cavités sont formées et que les saillies s'insèrent respectivement par crabotage dans la charge de mousse rigide (34) et les noeuds d'ancrage formés en une seule pièce sur celle-ci pénètrent dans les cavités, et en ce qu'au moins l'une des faces ouvertes des chambres (28, 30, 32) est recouverte d'un morceau de la feuille (36) qui est pourvue, pour un enlèvement aisé, d'une surface antiadhérente sur la face orientée vers la charge de mousse rigide (34).

FIG.2

FIG.1

FIG.3

FIG.4

2

FIG.5

FIG.6

FIG.7